(19) **Europäisches Patentamt**

**European Patent Office**

**Office européen des brevets**

(11) **EP 1 056 218 B1**

(12) **EUROPEAN PATENT SPECIFICATION**

(45) Date of publication and mention
of the grant of the patent:
**10.08.2005  Bulletin 2005/32**

(51) Int Cl.7: **H04B 7/005**

(21) Application number: **99110341.7**

(22) Date of filing: **28.05.1999**

(54) **A method for controlling the power dissipation of a multislot digital mobile communication system**

Verfahren zur Regelung der Verlustleistung für ein mehrfachzeitschlitziges digitales mobiles Kommunikationssystem

Procédé de régulation de la puissance de dissipation pour un système de communication mobile numérique à voies temporelles multiples

(84) Designated Contracting States:
**DE DK FR GB SE**

(43) Date of publication of application:
**29.11.2000  Bulletin 2000/48**

(73) Proprietor: **ROBERT BOSCH GMBH**
**70442 Stuttgart (DE)**

(72) Inventors:
• **Rysgaard, Bent**
**DK-9220 Aalborg (DK)**
• **Madsen,Ulrik Riis**
**DK-9000 Aalborg (DK)**

(56) References cited:
**EP-A- 0 917 303**          **GB-A- 2 286 315**

## Description

BACKGROUND OF THE INVENTION

The present invention relates to a method for controlling the power dissipation of a multislot digital mobile communication system.

Although applicable to any multislot digital mobile communication system, the present invention and its underlying problems will be discussed with particular reference to any multislot mobile telephone system.

Today, a mobile phone is considered to belong to one and only one power class specifying the fixed maximum output power of the mobile phone when transmitting. If the mobile at the same time had multislot capabilities, this would increase the power dissipated in the power amplifier stage of the transmitter significantly. Normally, a power amplifier can withstand the temperature when transmitting with one or two executive TX timeslots, but further increases in the number of executive timeslots are not possible unless very expensive and massive high power amplifiers are used. When introducing such high power amplifier stages, the temperature of the handset will increase.

This results in two disadvantages being the operating temperature for all the surrounding circuitry and the temperature of the handset itself seen from the user.

When transmitting with a certain power level the power amplifier reaches a final equilibrium temperature. This temperature must be within an allowable temperature range of the power amplifier with the given operable power level. When a greater number of executive TX timeslots with said given power level is used, the power amplifier will reach a higher temperature than the maximum allowable temperature, and there will be the risk of damaging its components.

It is known for mobiles in circuit switched calls when inserted or removed from hands-free kits where the hands-free kit includes a RF booster circuitry that the power amplifier of the mobile is switched off/on when the connection to the external RF booster circuitry is established/deestablished, or at least reduced to a low level when the connection is established and vice versa.

SUMMARY OF THE INVENTION

The present invention provides a method for controlling the power dissipation of a multislot digital mobile communication system according to claim 1.

The principal idea underlying the present invention is the preparation of a relation between the number of executive TX timeslots in a predetermined time period and the dissipated power in said predetermined time period for different output powers. Moreover, a maximum allowable dissipated power in said predetermined time period is determined. Most importantly, a coordination of the number of executive TX timeslots in said predetermined time period and the output power for each transmission burst is established such that the maximum allowable dissipated power in said predetermined time period is not exceeded.

A particular advantage of the present invention is that a greater flexibility is achieved. There is in principle no upper limit of the number of executive TX timeslots as long as the output power is appropriatly reduced.

The largest advantage is the cost of producing multislot mobiles. A power amplifier stage with lower allowed power dissipation is cheaper than high power stages.

Moreover, it is the size and operating temperature of the handset. High power amplifier stages are larger than low power amplifier stages.

Preferred embodiments of the present invention are listed in the dependent claims.

According to a preferred embodiment, in a first step the number of executive TX timeslots is selected and in a second step output power is selected accordingly.

According to a further preferred embodiment, in a first step the output power is selected and in a second step the number of executive TX timeslots is selected accordingly.

According to a further preferred embodiment, said relation is stored in a table in a memory of said digital mobile communication system.

According to a further preferred embodiment, said digital mobile communication system is adapted to operate in a plurality of modes, each mode having an associated number of executive TX timeslots in said predetermined time period, and wherein in a first step the mode is selected and in a second step the output power is selected accordingly.

According to a further preferred embodiment, said digital mobile communication system includes an input means for inputting the number of executive TX timeslots in said predetermined time period and/or the output power. Therein, a corresponding selection is performed therewith.

According to a further preferred embodiment, the coordinating step is performed dynamically every predetermined number of time periods.

According to a further preferred embodiment, the coordinating step is performed once per call.

According to a further preferred embodiment, said digital mobile communication system is a mobile telephone system.

According to a further preferred embodiment, said maximum allowable dissipated power is determined in accordance with a maximum operating temperature.

BRIEF DESCRIPTION OF THE DRAWINGS

The present invention will become more fully understood by the following detailed description of preferred embodiments thereof in conjunction with the accompaying drawings, in which:

Fig. 1    a schematic illustration of multislot transmission capability in a mobile telephone system;

Fig. 2    a schematic illustration of the power dissipation depending on the number of executive TX timeslots in a predetermined time period and the dissipated power in said predetermined time period for different output powers; and

Fig. 3    an illustration of process steps in an embodiment of the method according to the present invention.

DESCRIPTION OF THE PREFERRED EMBODIMENTS

In the figures, the same reference signs denote the same or functionally equivalent elements

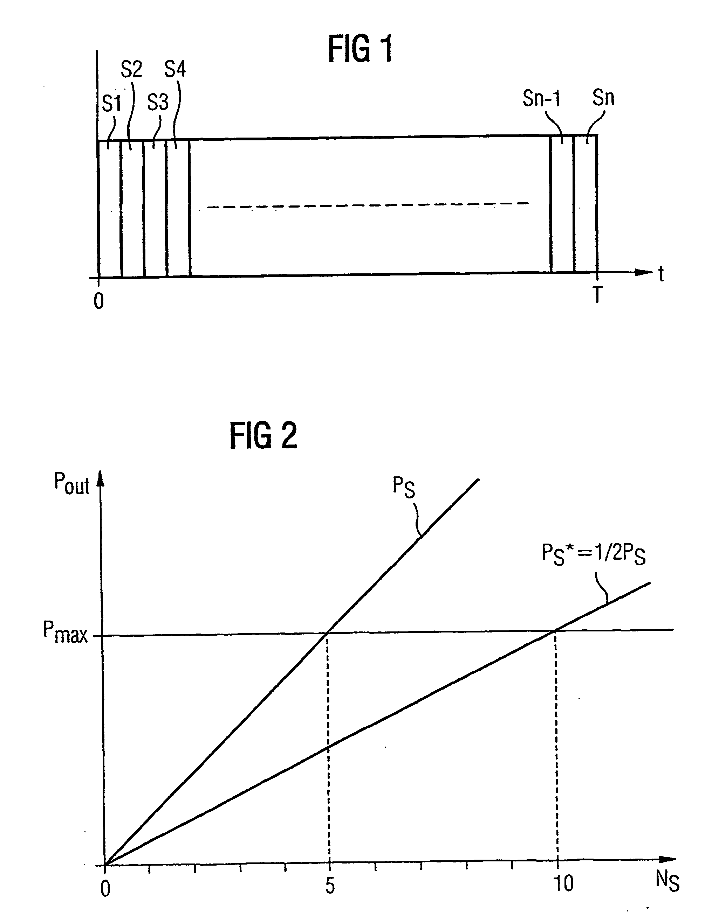

Fig. 1 is a schematic illustration of multislot transmission capability in a mobile telephone system.

In Fig. 1, t denotes the time in arbitrary units, T denotes a predetermined time period, and S1, S2, ..., Sn are executive TX timeslots.

In each timeslot, a certain mobile telephone is allowed to transmit data. If any mobile telephone is allowed to use more than one timeslot per predetermined time period T, this mobile telephone has multislot capability.

Fig. 2 is a schematic illustration of the power dissipation depending on the number of executive TX timeslots in a predetermined time period and the dissipated power in said predetermined time period for different output powers; and

In Fig. 2, there is shown a relation between the number $N_S$ of executive TX timeslots in said predetermined time period T and the dissipated power Pout in said predetermined time period T for different output powers $P_S$ and $P_S{}^*$ per transmission burst for a specific mobile phone, wherein

$$0,5 \times P_S = P_S{}^* \qquad (1)$$

A maximum allowable dissipated power Pmax in said predetermined time period T is shown by a horizontal line.

Thus, one can obtain from Fig. 2 that for output power $P_S$, the maximum allowable dissipated power Pmax is reached at five executive TX timeslots in said predetermined time period T, whereas for output power $0,5 \times P_S = P_S{}^*$, the maximum allowable dissipated power Pmax is reached at ten executive TX timeslots in said predetermined time period T.

Thus, for six executive TX timeslots in said predetermined time period T, changing the power class meaning that the output power is decreased from $P_S$ to $P_S{}^*$ in order to fall below the Pmax line is one possibility.

It is also possible to decrease the number of executive TX timeslots because it is the mean transmitted power that determines the temperature of the power amplifier.

This change of output power or equivalently the "power class" is dependent on the number of timeslots allocated by the network for the mobile to use. Preferably, the mobile can change the power class dynamically both establishing and modifying connections to the network and thereby of course also when releasing or downgrading connections.

A mobile with a certain multislot capability may or may not have large differences in the maximum number of possible TX timeslots dependent on whether it operates in circuit or packet switched mode. F.e. multislot class 12 allows a mobile to send in maximum 2 executive timeslots in circuit switched mode but 4 executive timeslots in packet switched mode. A technical solution in this case is to use a higher mobile power class in circuit switched mode than in packet switched mode. Hereby, there is a relation between the mode of operation and the power class reported to the network.

It is also possible to let the user decide the power class directly or indirectly by controlling the number of TX timeslots he/she directly or indirectly requests for one or multiple connections.

In another solution, the power class of the mobile remains the same during one connection's lifetime whereas a further solution allows the power class of the mobile to change dynamically.

When establishing a connection to the network the mobile reports its power class to the network. This may or may not be related to the service or speed of data transfer requested by user for mobile originated connections.

In an active connection, the power class can be changed if the allocation changes to more or less TX timeslots. In good coverage this has no consequence whatsoever to the operation of the mobile seen from the user. In poor coverage this will restrict the user from using maximum number of TX timeslots because the mobile may have to transmit with more power than possible considering the number of TX timeslots and thereby the maximum power possible send by the mobile. Of course, the user will have the ability to downgrade the connection requested to get access to network services but only at a lower speed. In poor coverage this could be argued to be a waste of money anyway.

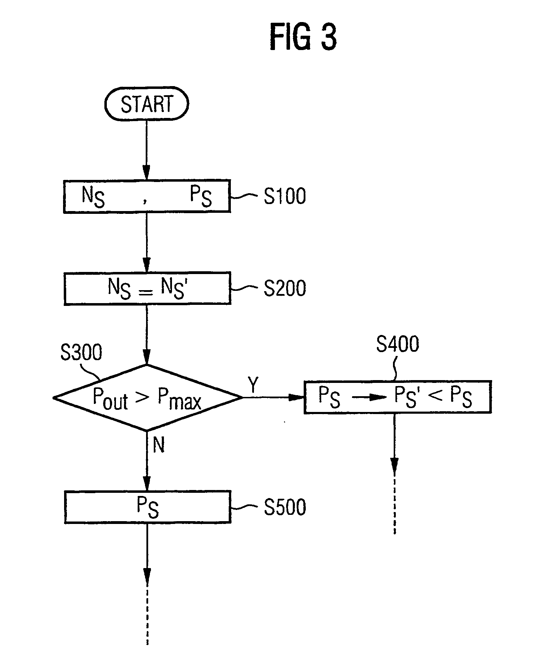

Fig. 3 is an illustration of process steps in an embodiment of the method according to the present invention.

In Fig. 3, S100-S500 denote method steps.

For a output power $P_S$ and a given number of executive TX timeslots $N_S$ selected in step S100, let us assume that the power amplifier is capable of handling the dissipated power Pout. An increment of the number of executive TX timeslots to $N_S'$ in step S200 keeping the output power $P_S$ constant causes the temperature of the power amplifier to rise above the specified maximum range.

To avoid this it is determined in step S300, if Pout > Pmax, and in the affirmative case one changes the output power to $P_S' < P_S$ in step 400 so that the output power Pout is lower. In the negative case, the output power $P_S$ can be maintained.

Although the present invention has been described with respect to preferred embodiments thereof, it should be understood that many modifications can be performed without departing from the scope of the invention as defined by the appended claims.

Particularly, the invention is not limited to mobile telephones, but can be applied to other mobile multislot communication systems.

Moreover, the power classes may either be discretly or continously selectable. There can be different values of Pmax depending on the external temperature or the housing temperature of the mobile.

## Claims

1. A method for controlling the power dissipation of a multislot digital mobile communication system comprising the steps of:

   preparing a relation between the number ($N_S$) of executive TX timeslots in a predetermined time period (T) and the dissipated power (Pout) in said predetermined time period (T) for different output powers ($P_S$, $P_S^*$);

   determining a maximum allowable dissipated power (Pmax) in said predetermined time period (T); and

   coordinating the number ($N_S$) of executive TX timeslots in said predetermined time period (T) and the output power ($P_S$, $P_S^*$) such that the maximum allowable dissipated power (Pmax) in said predetermined time period (T) is not exceeded.

2. The method according to claim 1, wherein in a first step the number ($N_S$) of executive TX timeslots is selected and in a second step output power ($P_S$, $P_S^*$) is selected accordingly.

3. The method according to claim 1, wherein in a first step the output power ($P_S$, $P_S^*$) is selected and in a second step the number ($N_S$) of executive TX timeslots is selected accordingly.

4. The method according to one of the preceeding claims, wherein said relation is stored in a table in a memory of said digital mobile communication system.

5. The method according to one of the preceeding claims, wherein said digital mobile communication system is adapted to operate in a plurality of modes, each mode having an associated number ($N_S$) of executive TX timeslots in said predetermined time period (T), and wherein in a first step the mode is selected and in a second step the output power ($P_S$, $P_S^*$) is selected accordingly.

6. The method according to one of the preceeding claims, wherein said digital mobile communication system includes an input means for inputting the number ($N_S$) of executive TX timeslots in said predetermined time period (T) and/or the output power ($P_S$, $P_S^*$), and wherein a corresponding selection is performed therewith.

7. The method according to one of the preceeding claims, wherein the coordinating step is performed dynamically every predetermined number of time periods (T).

8. The method according to one of the preceeding claims, wherein the coordinating step is performed once per call.

9. The method according to one of the preceeding claims, wherein said digital mobile communication system is a mobile telephone system.

10. The method according to one of the preceeding claims, wherein said maximum allowable dissipated power (Pmax) is determined in accordance with a maximum operating temperature.

## Patentansprüche

1. Verfahren zum Regeln des Leistungsverlusts eines digitalen Multizeitschlitz-Mobilkommunikationssystems mit folgenden Schritten:

   Vorbereiten eines Verhältnisses zwischen der Anzahl ($N_S$) von Exekutiv-TX-Zeitschlitzen in einer vorbestimmten Zeitperiode (T) und der Verlustleistung (Pout) in der vorbestimmten Zeitperiode (T) für unterschiedliche Ausgangsleistungen ($P_S$, $P_{s^*}$);

   Bestimmen einer maximal zulässigen Verlustleistung (Pmax) in der vorbestimmten Zeitperiode (T); und

   Koordinieren der Anzahl ($N_S$) von Exekutiv-TX-Zeitschlitzen in der vorbestimmten Zeitperiode (T) und der Ausgangsleistung ($P_s$, $P_{s*}$), so daß die maximal zulässige Verlustleistung (Pmax) in der vorbestimmten Zeitperiode (T) nicht überschritten wird.

2. Verfahren nach Anspruch 1, wobei in einem ersten Schritt die Anzahl ($N_s$) von Exekutiv-TX-Zeitschlitzen ausgewählt und in einem zweiten Schritt die Ausgangsleistung ($P_s$, $P_{s*}$) dementsprechend ausgewählt wird.

3. Verfahren nach Anspruch 1, wobei in einem ersten Schritt die Ausgangsleistung ($P_s$, $P_{s*}$) ausgewählt und in einem zweiten Schritt die Anzahl ($N_S$) von Exekutiv-TX-Zeitschlitzen dementsprechend ausgewählt wird.

4. Verfahren nach einem der vorhergehenden Ansprüche, wobei das Verhältnis in einer Tabelle in einem Speicher des digitalen Mobilkommunikationssystems gespeichert wird.

5. Verfahren nach einem der vorhergehenden Ansprüche, wobei das digitale Mobilkommunikationssystem in einer Mehrzahl von Betriebsarten arbeiten kann, wobei jede Betriebsart eine zugeordnete Anzahl ($N_s$) von Exekutiv-TX-Zeitschlitzen in der vorbestimmten Zeitperiode (T) aufweist und wobei in einem ersten Schritt die Betriebsart ausgewählt und in einem zweiten Schritt die Ausgangsleistung ($P_s$, $P_{s*}$) dementsprechend ausgewählt wird.

6. Verfahren nach einem der vorhergehenden Ansprüche, wobei das digitale Mobilkommunikationssystem ein Eingangsmittel zum Eingeben der Anzahl ($N_S$) von Exekutiv-TX-Zeitschlitzen in der vorbestimmten Zeitperiode (T) und/oder der Ausgangsleistung ($P_s$, $P_{s*}$) umfaßt und wobei damit eine entsprechende Auswahl durchgeführt wird.

7. Verfahren nach einem der vorhergehenden Ansprüche, wobei der Schritt des Koordinierens dynamisch jede vorbestimmte Anzahl von Zeitperioden (T) durchgeführt wird.

8. Verfahren nach einem der vorhergehenden Ansprüche, wobei der Schritt des Koordinierens einmal pro Verbindung durchgeführt wird.

9. Verfahren nach einem der vorhergehenden Ansprüche, wobei das digitale Mobilkommunikationssystem ein Mobiltelefonsystem ist.

10. Verfahren nach einem der vorhergehenden Ansprüche, wobei die maximal zulässige Verlustleistung (Pmax) entsprechend einer maximalen Betriebstemperatur bestimmt wird.

**Revendications**

1. Procédé de régulation de la dissipation de puissance d'un système de communication mobile numérique à voies temporelles multiples, comprenant les étapes consistant à :

   - préparer une relation entre le nombre ($N_S$) de voies temporelles d'exécution TX dans une période de temps prédéterminée (T), et la puissance dissipée (Pout) dans cette période de temps prédéterminée (T) pour différentes puissances de sortie ($P_s$, $P_s*$),
   - déterminer une puissance dissipée admissible maximum (Pmax) dans cette période de temps prédéterminée (T), et
   - coordonner le nombre ($N_s$) de voies temporelles d'exécution TX dans la période de temps prédéterminée (T), avec la puissance de sortie ($P_s$, $P_s*$), de façon que la puissance dissipée admissible maximum (Pmax) dans cette période de temps prédéterminée (T) ne soit pas dépassée.

2. Procédé selon la revendication 1, dans lequel dans une première étape, on sélectionne le nombre ($N_S$) de voies temporelles d'exécution TX, et dans une seconde étape, la puissance de sortie ($P_s$, $P_s*$) est sélectionnée en conséquence.

3. Procédé selon la revendication 1, dans lequel dans une première étape, on sélectionne la puissance de sortie ($P_S$, $P_s*$) et, dans une seconde étape, le nombre ($N_S$) de voies temporelles d'exécution TX est sélectionné en conséquence.

4. Procédé selon l'une quelconque des revendications précédentes, dans lequel la relation ci-dessus est stockée dans un tableau d'une mémoire du système de communication mobile numérique.

5. Procédé selon l'une quelconque des revendications précédentes, dans lequel le système de communication mobile numérique est destiné à fonctionner dans une pluralité de modes, chaque mode ayant un nombre associé ($N_s$) de voies temporelles d'exécution TX dans la période de temps prédéterminée (T), et le mode est sélectionné dans une première étape tandis que, dans une seconde étape, la puissance de sortie ($P_S$, $P_s*$) est sélectionnée en conséquence.

**6.** Procédé selon l'une quelconque des revendications précédentes,
dans lequel
le système de communication mobile numérique comprend un moyen d'entrée pour introduire le nombre ($N_S$) de voies temporelles d'exécution TX dans la période de temps prédéterminée (T) et/ou la puissance de sortie ($P_s$, $P_s$*), et
une sélection correspondante est effectuée avec ces éléments.

**7.** Procédé selon l'une quelconque des revendications précédentes,
dans lequel
l'étape de coordination est effectuée dynamiquement pour chaque nombre prédéterminé de période de temps (T).

**8.** Procédé selon l'une quelconque des revendications précédentes,
dans lequel
l'étape de coordination est effectuée une fois par appel.

**9.** Procédé selon l'une quelconque des revendications précédentes,
dans lequel
le système de communication mobile numérique est un système de téléphone mobile.

**10.** Procédé selon l'une quelconque des revendications précédentes,
dans lequel
la puissance dissipée admissible maximum (Pmax) est déterminée suivant la température de fonctionnement maximum.

# FIG 1

# FIG 2

# FIG 3

```
          ( START )
              |
              v
  +---------------------+
  |  N_S     ,     P_S  |—— S100
  +---------------------+
              |
              v
  +---------------------+
  |     N_S = N_S'      |—— S200
  +---------------------+
              |
   S300       v                              S400
      \   / \                                   |
       \ /   \              Y     +-----------------------------+
   <  P_out > P_max  >----------->|  P_S  ——▶  P_S' < P_S        |
       \     /                    +-----------------------------+
        \   /                                  |
          | N                                  v
          v                                    ¦
  +---------------------+                      ¦
  |        P_S          |—— S500
  +---------------------+
          |
          v
          ¦
          ¦
```

$N_S$, $P_S$ — S100

$N_S = N_S'$ — S200

S300: $P_{out} > P_{max}$

S400: $P_S \longrightarrow P_S' < P_S$

S500: $P_S$